# EUROPEAN PATENT APPLICATION

(11) **EP 3 847 923 A1**
(43) Date of publication of application: **14.07.2021**
(21) Application number: 20150623.5
(22) Date of filing: 07.01.2020
(51) Int. Cl.: A45C 5/14, A45C 15/00, H02J 7/14

(54) **SELF-CHARGEABLE SUITCASE**

(71) Applicant: Fon Da Tech Co., Ltd., Hsinchu County 310 (TW)
(72) Inventor: LIU, Yung-Ting, 310 Hsinchu County (TW)
(74) Representative: 2K Patentanwälte Blasberg Kewitz & Reichel

(57) **Abstract**

A suitcase (1) is provided in some embodiments of the present disclosure, including a case body (10), a plurality of wheels (20) connected to the case body, an energy-generating element (70) electrically connected to at least one of the wheels, an energy storage device (40) disposed in the case body, and electrically connected to the energy-generating element, and an electronic device (50) disposed in the case body and electrically connected to the energy storage device.

## Description

### BACKGROUND OF THE DISCLOSURE

### Field of the Disclosure

The present disclosure relates to a self-chargeable suitcase.

### Description of the Related Art

Most suitcases on the commercial market today are generally made up of a case body, a draw bar, and a plurality of wheels fixed to the case body. Sometimes the suitcases are used for transporting groceries from a wholesale market or for logistics systems. As a result, it is important to track the path of those suitcases. However, tracking systems in such suitcases require electrical energy to operate, which results in the suitcases having to be constantly recharged at a charge station.

### BRIEF SUMMARY OF THE DISCLOSURE

A suitcase is provided in some embodiments of the present disclosure, including a case body, a plurality of wheels connected to the case body, an energy-generating element electrically connected to at least one of the wheels, an energy storage device disposed in the case body, and electrically connected to the energy-generating element, and an electronic device disposed in the case body and electrically connected to the energy storage device.

In some embodiments, the case body includes a bottom portion, and the energy storage device is disposed in the bottom portion. In some embodiments, the case body further includes a top portion that is separate from the bottom portion, and the electronic device is disposed in the top portion. In some embodiments, the electronic device is disposed in the bottom portion. In some embodiments, the surface of the energy storage device is exposed from the bottom portion and level with the surface of the bottom portion.

In some embodiments, the energy-generating element is disposed in at least one of the wheels. In some embodiments, the energy-generating element is disposed on the case body and exposed from the case body. In some embodiments, the case body includes a recess, and the energy-generating element is disposed in the recess. In some embodiments, the energy-generating element is disposed in the case body. In some embodiments, the suitcase further includes another energy-generating element, wherein each of the generating elements is connected to a different wheel.

In some embodiments, the electronic device is a communication device, configured to remain in electrical communication with a receiving device that is separate from the suitcase. In some embodiments, the communication device includes a radio frequency identification (RFID) element. In some embodiments, at least one of the wheels is electrically insulated from the energy storage device. In some embodiments, the suitcase further includes a shaft, wherein the wheels and the energy-generating element are connected through the shaft. In some embodiments, the suitcase further includes another energy-generating element, wherein the two energy-generating elements are connected to different wheels.

### BRIEF DESCRIPTION OF THE DRAWINGS

Aspects of this disclosure are best understood from the following detailed description when read with the accompanying figures. It should be noted that, in accordance with common practice in the industry, various features are not drawn to scale. In fact, the dimensions of the various features may be arbitrarily increased or reduced for clarity of discussion.
FIG. 1 is a schematic view of a suitcase in some embodiments of the present disclosure.
FIG. 2 is a front view of the suitcase in FIG. 1.
FIG. 3A is a schematic view of a portion of a suitcase in some embodiments of the present disclosure.
FIG. 3B is a schematic view of a portion of a suitcase in some embodiments of the present disclosure.
FIG. 3C is a schematic view of a portion of a suitcase in some embodiments of the present disclosure.
FIG. 3D is a schematic view of a portion of a suitcase in some embodiments of the present disclosure.
FIG. 3E is a schematic view of a portion of a suitcase in some embodiments of the present disclosure.
FIG. 4 is a schematic view of a suitcase in some embodiments of the present disclosure.
FIG. 5 is a schematic view of a suitcase in some embodiments of the present disclosure.
FIG. 6A is a schematic view of a suitcase in some embodiments of the present disclosure.
FIG. 6B shows a portion of the suitcase of FIG. 6A.
FIG. 6C is a schematic view of a portion of a suitcase in some embodiments of the present disclosure.
FIG. 6D is a side view of the suitcase of FIG. 6C.
FIG. 6E is a side view of a suitcase in some embodiments of the present disclosure.
FIG. 7A is a schematic view of a suitcase in some embodiments of the present disclosure.
FIG. 7B shows a portion of the suitcase of FIG. 7A.
FIG. 7C is a schematic view of a portion of a suitcase in some embodiments of the present disclosure.
FIG. 7D is a side view of the suitcase of FIG. 7C.
FIG. 7E is a side view of a suitcase in some embodiments of the present disclosure.

### DETAILED DESCRIPTION OF THE DISCLOSURE

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are in direct contact, and may also include embodiments in which additional features may be disposed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are in direct contact, and may also include embodiments in which additional features may be disposed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used in the present disclosure for ease of description of one feature's relationship to another feature. The spatially relative terms are intended to cover different orientations of the device, including the features.

Unless defined otherwise, all technical and scientific terms used herein have the same meaning as commonly understood by one of ordinary skill in the art to which this disclosure belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

Use of ordinal terms such as "first", "second", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

In addition, in some embodiments of the present disclosure, terms concerning attachments, coupling and the like, such as "connected" and "interconnected", refer to a relationship wherein structures are secured or attached to one another either directly or indirectly through intervening structures, as well as both movable or rigid attachments or relationships, unless expressly described otherwise.

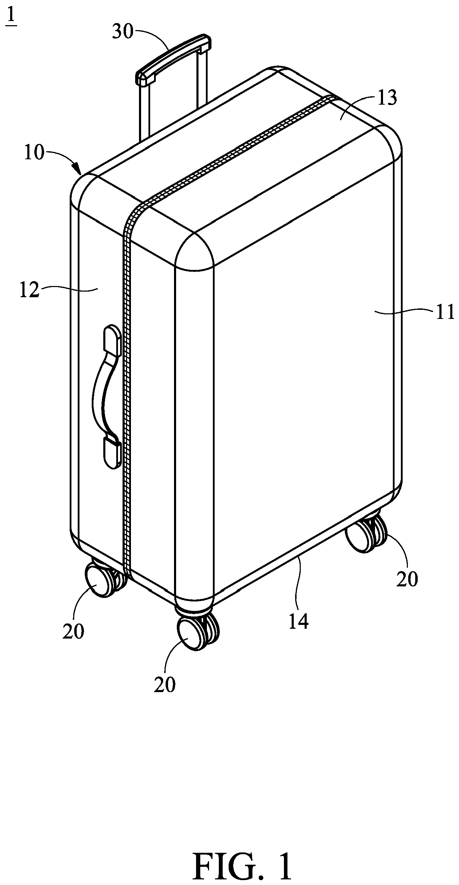

FIG. 1 is a schematic of a suitcase 1 in some embodiments of the present disclosure. The suitcase 1 includes a case body 10, a plurality of wheels 20 connected to the case body 10, and a draw bar 30 connected to the case body. The case body 10 includes a front case 11 and a rear case 12 connected with each other. Furthermore, the case body 10 has a top surface 13 and a bottom surface 14, wherein the wheels 20 are disposed on the bottom surface 14, and the draw bar 30 is disposed on the top surface 13.

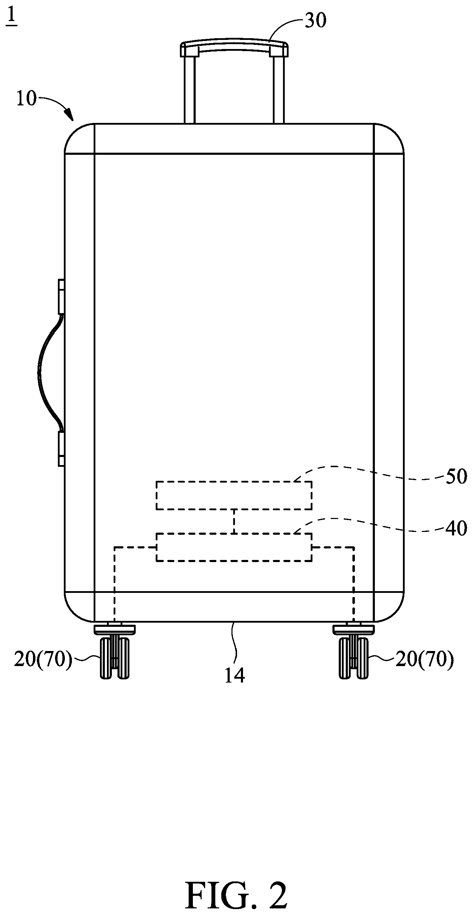

FIG. 2 is a front view of the suitcase 1. The suitcase 1 may further include an energy storage device 40 and an electronic device 50 disposed in the case body 10. The energy storage device 40 may be a battery, and may be electrically connected to the wheels 20 and the electronic device 50.

In some embodiments, at least one of the wheels 20 may include an energy-generating element 70 disposed in the wheel 20 and electrically connected to the energy storage device 40 and/or the electronic device 50, as indicated by the dashed lines in FIG. 2. However, the present disclosure is not limited thereto. In some embodiments, the energy-generating element 70 may be attached at the wheel 20 and exposed from the wheel 20. The energy-generating element 70 may create electrical power through the rotation of the wheel 20. Afterwards, the energy created by the energy-generating element 70 may be stored in the energy storage device 40, and the provided to the electronic device 50. As a result, the suitcase 1 may be a self-chargeable suitcase.

In some embodiments, the electronic device 50 may include a communication device configured to electrically communicated with a receiving device (not shown) outside from the suitcase 1. For example, the electronic device 50 may be a radio frequency identification (RFID) element, which may use electromagnetic fields to automatically identify and track tags attached to objects. The tags may contain electronically stored information. For example, passive tags collect energy from a nearby reader's interrogating radio waves, and active tags may be connected to a local power source (such as the energy storage device 40) and may operate hundreds of meters from the RFID reader. Unlike a barcode, the tags do not need to be within the line of sight of the reader, so it may be embedded in the case body 10.

In some embodiments, the electronic device 50 may include a controller, which may include a sensor, a processor, a memory, a transmitter, and a receiver. In some embodiments, the controller is configured detect the position of the suitcase, collect and analyze measured position and determine if the suitcase is positioned at a predetermined position. The controller may also be configured to send instructions external devices if the measured position is not a desired position.

The processor of the controller may include any one or more of a microprocessor, a controller, a digital signal processor (DSP), an application specific integrated circuit (ASIC), a field-programmable gate array (FPGA), or equivalent discrete or integrated logic circuitry. The processor may be connected to the memory, the transmitter, and the receiver. In some embodiments, the processor may be connected to a display device (such as a monitor or other type of screen) exposed from the suitcase for viewing alerts and instructions.

The memory of the controller may be a semiconductor memory such as, for example, read-only memory, a random access memory, a FRAM, or a NAND flash memory. The memory may interface with the processor and associated processors such that the processor may write to and read from the memory. In some embodiments, the memory may be configured to store the position information of the suitcase for tracking the transportation of the suitcase. The receiver of the controller may be configured to receive transmissions from external devices, and the transmitter of the controller may be configured to send instructions to external devices.

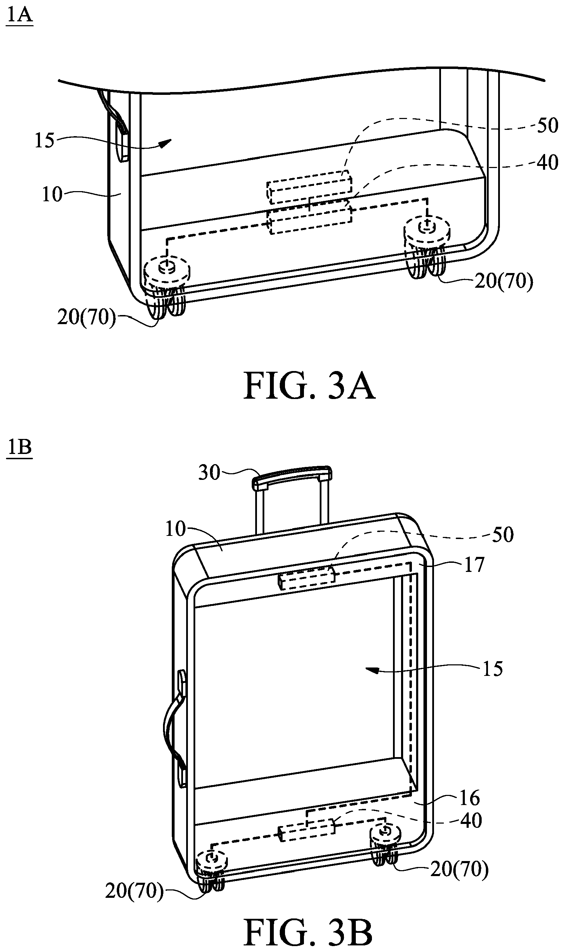

FIG. 3A is a schematic view of a portion of a suitcase 1A in some embodiments of the present disclosure. In FIG. 3A, the case body 10 of the suitcase 1A may include a space 15 in the case body 10 and a bottom portion 16 adjacent to the wheels 20, wherein the energy storage device 40 and the electronic device 50 may be disposed in the bottom portion 16, but the present disclosure is not limited thereto. As a result, the distance between the wheels 20, the energy storage device 40, and the electronic device 50 may be reduced, the wiring required for transfer the energy generated by the energy-generating element 70 may be reduced, or the size of the space 15 may be enlarged.

However, the present disclosure is not limited thereto. For example, FIG. 3B is a schematic view of a portion of a suitcase 1B in some embodiments of the present disclosure. The case body 10 of the suitcase 1B may further include a top portion 17 positioned opposite to the bottom portion 16. The energy storage device 40 of the suitcase 1B may be disposed in the bottom portion 16, and the electronic device 50 may be disposed in the top portion 17. As a result, if the electronic device 50 is a communication device (such as RFID device), the distance between the electronic device 50 and a receiving device (not shown) for receiving the signal generated from the electronic device 50 may be reduced to enhance the signal, or the material of the portion (e.g. the bottom portion 16 or the top portion 17) may include magnetic conductive material to enhance the signal intensity provided by the electronic device 50.

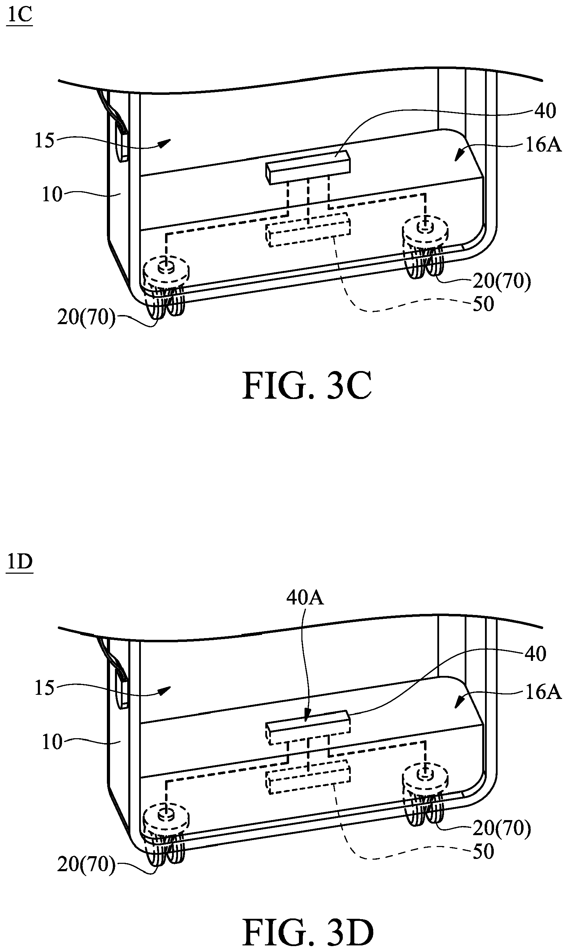

FIG. 3C is a schematic view of a portion of a suitcase 1C in some embodiments of the present disclosure. The bottom portion 16 of the suitcase 1C may include a surface 16A facing the space 15, and the energy storage device 40 may be disposed on the surface 16A and exposed from the bottom portion 16. As a result, the energy storage device 40 may be easily replaced if there is no enough energy stored in the energy storage device 40.

FIG. 3D is a schematic view of a portion of a suitcase 1D in some embodiments of the present disclosure. The energy storage device 40 of the suitcase 1D may be disposed in the bottom portion 16, and the energy storage device 40 may include a surface 40A level with the surface 16A of the bottom portion 16. As a result, the energy storage device 40 may be easily replaced, and the case body 10 may have a flat inner surface (i.e. the surface 16A plus the surface 40A).

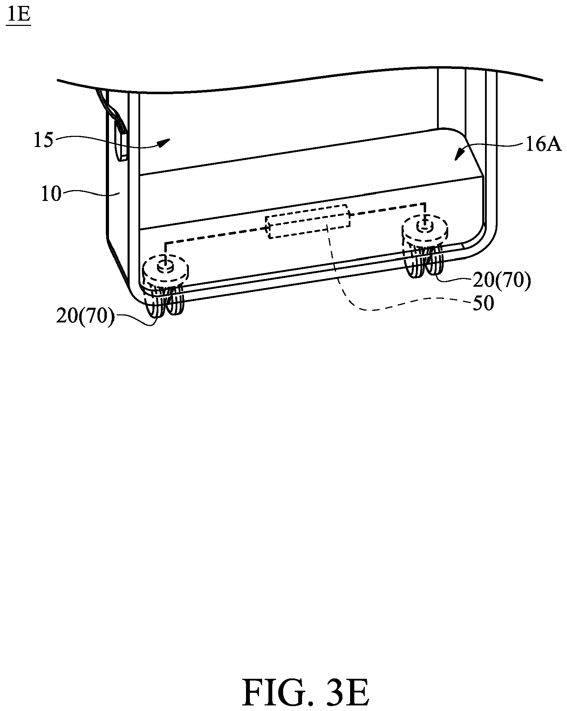

The suitcases of previous embodiments include the energy storage device 40. However, the present disclosure is not limited thereto. For example, the energy storage device 40 may be omitted in FIG. 3E, and the energy generated by the energy-generating element 70 may be directly provided to the electronic device 50 to reduce the amount of required elements in some embodiments.

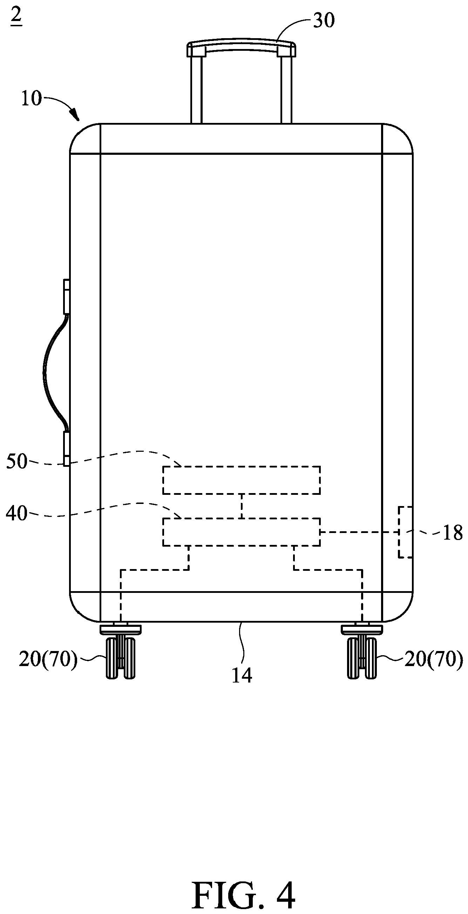

FIG. 4 is a schematic view of a suitcase 2 in some embodiments of the present disclosure. The suitcase 2 may further include a connecting port 18 connected to the energy storage device 40, and the energy stored in the energy storage device 40 may be provided to other electronic devices outside the suitcase 2 through the connecting port 18, or the energy storage device 40 may be charged through the connecting port 18 as well.

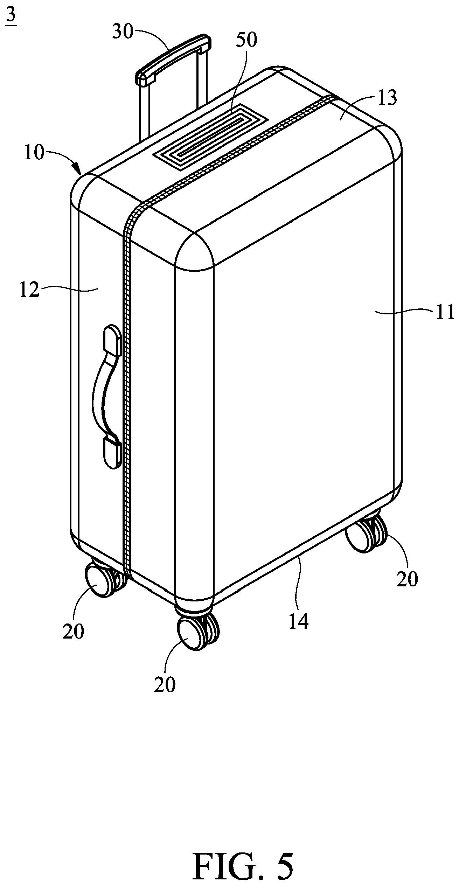

Although the electronic device 50 is disposed in the case body 10 in the previous embodiments, the present disclosure is not limited thereto. For example, FIG. 5 is a schematic view of a suitcase 3, wherein the electronic device 50 may be disposed on the top surface 13 of the case body 10 and exposed from the case body 10. As a result, the signal provided from the electronic device 50 may be easily received by other external devices. However, the present disclosure is not limited thereto. For example, in some embodiments, the electronic device 50 may be disposed on the bottom surface 14 of the suitcase, so the electronic device 50 may be exposed from the case body 10 and be hided (the bottom surface 14 is not shown when using the suitcase) at the same time.

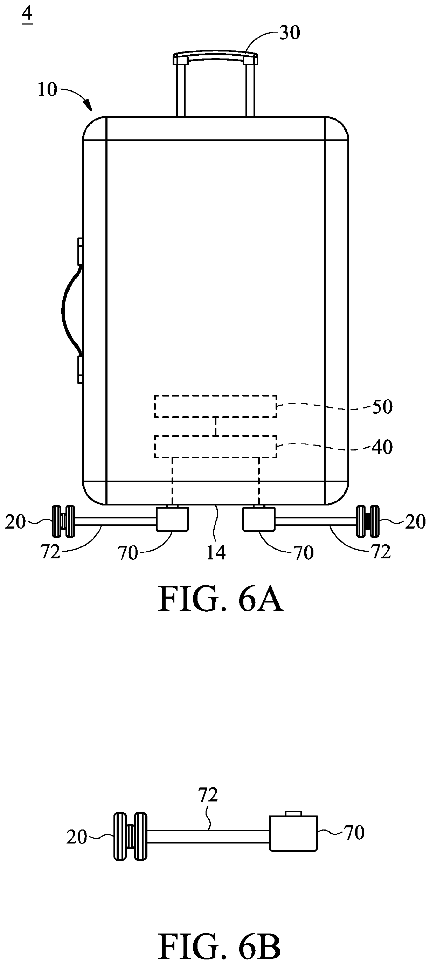

In some embodiments, the energy-generating element 70 may be separated from the wheels 20. For example, FIG. 6A is a schematic view of a suitcase 4 in some embodiments, and FIG. 6B shows a portion of the suitcase 4. The energy-generating element 70 of the suitcase 4 may be separated from the wheel 20 and may be connected to the wheel 20 through a shaft 72. The rotation of the wheel 20 may be transfer through the shaft 72 to the energy-generating element 70 for generating electrical energy. In some embodiments, the energy-generating element 70 may be exposed from the bottom surface 14 of the case body 10, so the energy-generating element 70 may be easily replaced. In some embodiments, one energy-generating element 70 may be connected to one wheel 20 in case any of the energy-generating elements 70 is broken.

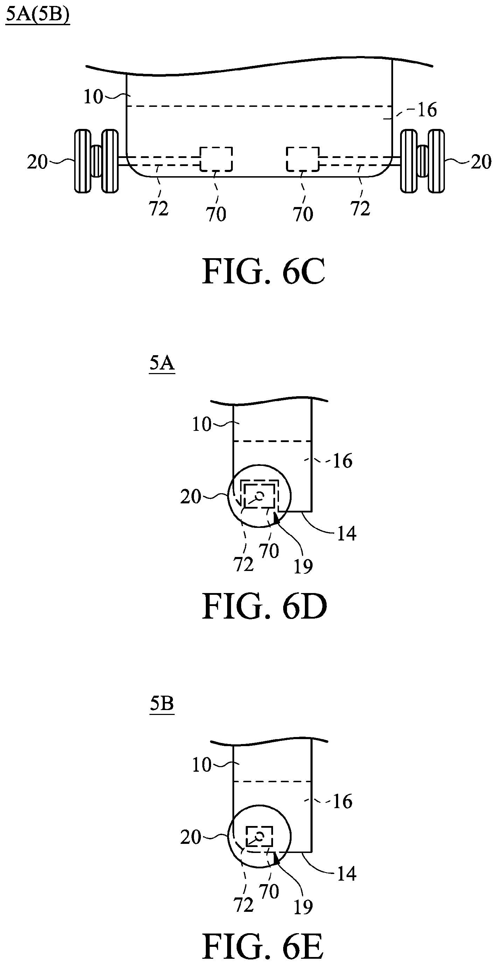

FIG. 6C is a schematic view of a portion of a suitcase 5A (or 5B) in some embodiments of the present disclosure, and FIG. 6D is a side view of a suitcase 5A in FIG. 6C. The case body 10 of the suitcase 5A may include a recess 19 positioned adjacent to the bottom portion 16, and the energy-generating element 70 and the shaft 72 may be disposed in the recess 19. A portion of the energy-generating element 70 may be exposed from the recess 19 to be easily replaced. However, the present disclosure is not limited thereto. For example, FIG. 6E is a side view of another suitcase 5B in some embodiments of the present disclosure, wherein the energy-generating element 70 and the shaft 72 may be disposed in the case body 10 and is not exposed from the case body 10 to protect the energy-generating element 70 and the shaft 72, such as disposed in the bottom portion 16.

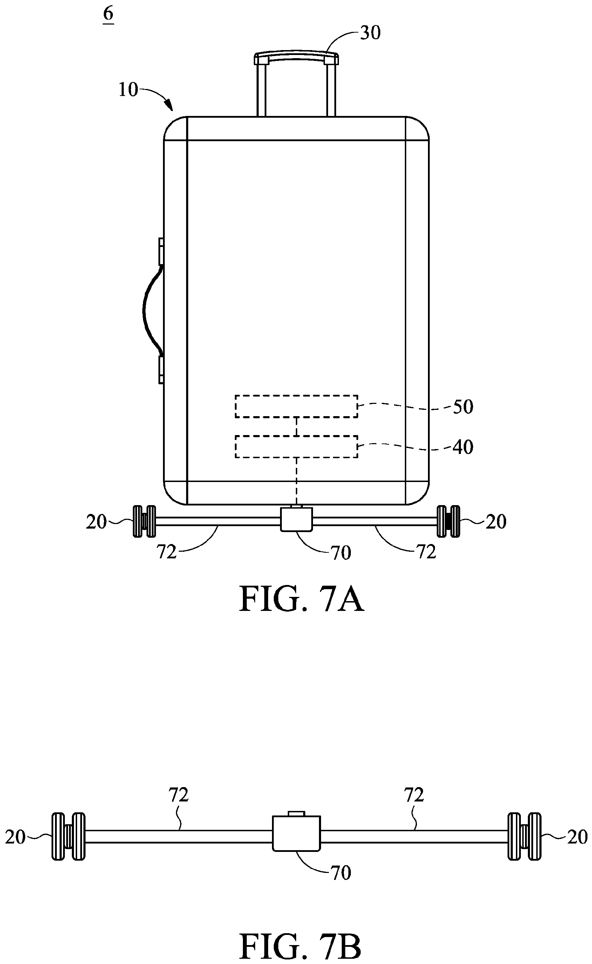

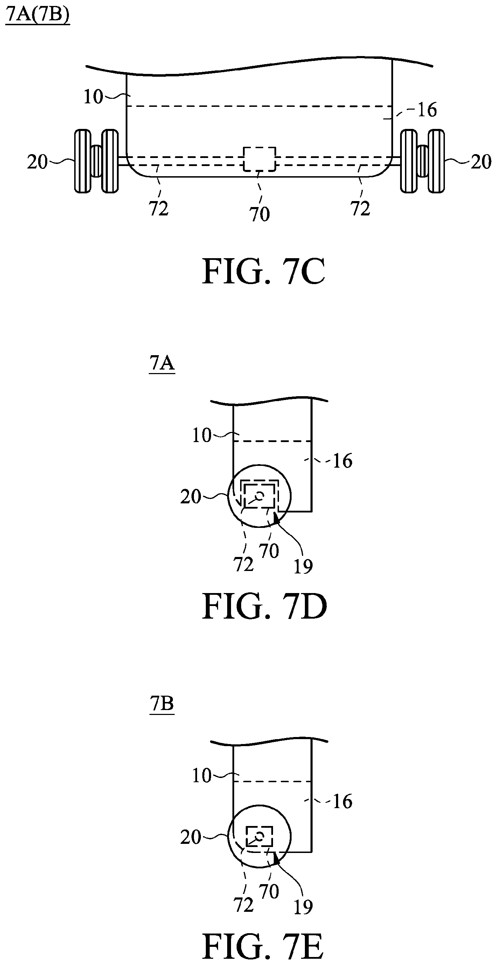

Although one energy-generating element 70 is connected to one wheel 20 in previous embodiments, the present disclosure is not limited thereto. For example, Fig. 7A is a schematic view of a suitcase 6 in some embodiments of the present disclosure, and FIG. 7B is a schematic view of a portion of the suitcase 6 in FIG. 7A. In this embodiment, a plurality of wheels 20, such as two or four wheels 20, may be connected to one energy-generating element 70. In some embodiments, the shaft 72 at the left (first shaft) may be rotated together with the shaft 72 at the right (second shaft) to simplify the mechanism. In some embodiments, the shaft 72 at the left (first shaft) may be rotated separately to the shaft 72 at the right (second shaft) to enhance the freedom of motion of the suitcase 6.

FIG. 7C is a schematic view of a portion of a suitcase 7A (or 7B) in some embodiments of the present disclosure, and FIG. 6D is a side view of a suitcase 7A. The case body 10 of the suitcase 7A may include a recess 19 positioned adjacent to the bottom portion 16, and the energy-generating element 70 and the shaft 72 may be disposed in the recess 19. A portion of the energy-generating element 70 may be exposed from the recess 19 to easily replace the energy-generating element 70. However, the present disclosure is not limited thereto. For example, FIG. 7E is a side view of another suitcase 7B in some embodiments of the present disclosure, wherein the energy-generating element 70 and the shaft 72 may be disposed in the case body 10 and is not exposed from the case body 10, such as when they are disposed in the bottom portion 16, to protect the energy-generating element 70 and the shaft 72.

In summary, a self-chargeable suitcase is provided in some embodiments of the present disclosure. The suitcase may be charged by the rotation of its wheels during movement and does not necessarily require to be charged by an external power source. As a result, time and space for charging the suitcase may be saved, so the cost may be reduced.

Although embodiments of the present disclosure and their advantages have been described in detail, it should be understood that various changes, substitutions and alterations can be made herein without departing from the spirit and scope of the disclosure as defined by the appended claims. Moreover, the scope of the present application is not intended to be limited to the particular embodiments of the process, machine, manufacture, and composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope of such processes, machines, manufacture, and compositions of matter, means, methods, or steps. In addition, each claim constitutes a separate embodiment, and the combination of various claims and embodiments are within the scope of the disclosure.

## Claims

1. A suitcase (1), comprising:
a case body (10);
a plurality of wheels (20) connected to the case body;
an energy-generating element (70) electrically connected to at least one of the wheels; and
an energy storage device (40) disposed in the case body, and electrically connected to the energy-generating element; and
an electronic device (50) disposed in the case body and electrically connected to the energy storage device.

2. The suitcase (1) as claimed in claim 1, wherein the case body (10) comprises a bottom portion (16), and the energy storage device (40) is disposed in the bottom portion.

3. The suitcase (1) as claimed in claim 2, wherein the case body (10) further comprises a top portion (17) that is separate from the bottom portion, and the electronic device (50) is disposed in the top portion (17).

4. The suitcase (1) as claimed in claim 2, wherein the electronic device (50) is disposed in the bottom portion (16).

5. The suitcase (1) as claimed in one of the claims 2-4, wherein a surface (40A) of the energy storage device (40) is exposed from the bottom portion and level with a surface (16A) of the bottom portion.

6. The suitcase (1) as claimed in one of the preceding claims, wherein the energy-generating element (70) is disposed in at least one of the wheels (20).

7. The suitcase (1) as claimed in one of the claims 1-5, wherein the energy-generating element (70) is disposed on the case body (10) and exposed from the case body.

8. The suitcase (1) as claimed in claim 7, wherein the case body (10) has a recess (19), and the energy-generating element (70) is disposed in the recess (19) and exposed from the case body.

9. The suitcase (1) as claimed in one of the claims 1-5, wherein the energy-generating element (70) is disposed in the case body (10).

10. The suitcase (1) as claimed in one of the preceding claims, further comprising another energy-generating element, wherein each of the generating elements (70) is connected to a different wheel (20).

11. The suitcase (1) as claimed in one of the preceding claims, wherein the electronic device (50) is a communication device, configured to electrically communicate to a receiving device that is separate from the suitcase.

12. The suitcase (1) as claimed in claim 11, wherein the communication device (50) comprises a radio frequency identification (RFID) element.

13. The suitcase (1) as claimed in one of the preceding claims, wherein at least one of the wheels (20) is electrically insulated from the energy storage device (40).

14. The suitcase (1) as claimed in one of the preceding claims, further comprising a shaft (72), wherein the wheels (20) and the energy-generating element (70) are connected through the shaft.

15. The suitcase (1) as claimed in one of the preceding claims, further comprising another energy-generating element, wherein the two energy-generating elements (70) are connected to different wheels (20).

## Amended claims

### Amended claims in accordance with Rule 137(2) EPC.

1. A suitcase (1), comprising:
a case body (10) having a recess (19);
a plurality of wheels (20) connected to the case body;
an energy-generating element (70) electrically connected to at least one of the wheels; and
an energy storage device (40) disposed in the case body, and electrically connected to the energy-generating element; and
an electronic device (50) disposed in the case body and electrically connected to the energy storage device;
**characterized in that** the suitcase (1) further comprises:
a shaft (72) connected to the plurality of wheels (20), wherein the wheels (20) and the energy-generating element (70) are connected through the shaft, wherein the shaft (72) is disposed in the recess (19) and exposed from the recess (19), and the entire shaft (72) is exposed from the outside of the case body (10).

2. The suitcase (1) as claimed in claim 1, wherein the case body (10) comprises a bottom portion (16), and the energy storage device (40) is disposed in the bottom portion.

3. The suitcase (1) as claimed in claim 2, wherein the case body (10) further comprises a top portion (17) that is separate from the bottom portion, and the electronic device (50) is disposed in the top portion (17).

4. The suitcase (1) as claimed in claim 2, wherein the electronic device (50) is disposed in the bottom portion (16).

5. The suitcase (1) as claimed in one of the claims 2-4, wherein a surface (40A) of the energy storage device (40) is exposed from the bottom portion and level with a surface (16A) of the bottom portion.

6. The suitcase (1) as claimed in one of the preceding claims, wherein the energy-generating element (70) is disposed in at least one of the wheels (20).

7. The suitcase (1) as claimed in one of the claims 1-5, wherein the energy-generating element (70) is disposed on the case body (10) and exposed from the case body.

8. The suitcase (1) as claimed in claim 7, wherein the energy-generating element (70) is disposed in the recess (19) and exposed from the case body.

9. The suitcase (1) as claimed in one of the claims 1-5, wherein the energy-generating element (70) is disposed in the case body (10).

10. The suitcase (1) as claimed in one of the preceding claims, further comprising another energy-generating element, wherein each of the generating elements (70) is connected to a different wheel (20).

11. The suitcase (1) as claimed in one of the preceding claims, wherein the electronic device (50) is a communication device, configured to electrically communicate to a receiving device that is separate from the suitcase.

12. The suitcase (1) as claimed in claim 11, wherein the communication device (50) comprises a radio frequency identification (RFID) element.

13. The suitcase (1) as claimed in one of the preceding claims, wherein at least one of the wheels (20) is electrically insulated from the energy storage device (40).

14. The suitcase (1) as claimed in one of the preceding claims, further comprising another energy-generating element, wherein the two energy-generating elements (70) are connected to different wheels (20).
